Europäisches Patentamt

**European Patent Office**

Office européen des brevets

(11) Numéro de publication: **0 044 789**
**B1**

(12) **FASCICULE DE BREVET EUROPEEN**

(45) Date de publication du fascicule du brevet: **12.09.84**

(21) Numéro de dépôt: **81401148.2**

(22) Date de dépôt: **21.07.81**

(51) Int. Cl.³: **H 04 N 1/40,** B 41 J 3/20

(54) **Dispositif de commande de points chauffants destinés à impressionner une surface thermo-sensible.**

(30) Priorité: **22.07.80 FR 8016154**

(43) Date de publication de la demande:
**27.01.82 Bulletin 82/04**

(45) Mention de la délivrance du brevet:
**12.09.84 Bulletin 84/37**

(84) Etats contractants désignés:
**BE DE GB IT NL**

(56) Documents cités:
**EP-A-0 018 762**
**DE-A-2 531 092**
**DE-B-1 548 792**

(73) Titulaire: **MATRA**
**4 rue de Presbourg**
**F-75116 Paris (FR)**

(72) Inventeur: **Lemoine, Maurice**
**131, avenue de la Clairière**
**78120 Rambouillet (FR)**
Inventeur: **Robbe, Michel**
**36bis, rue du Maréchal Maunoury**
**78700 Conflans (FR)**

(74) Mandataire: **Michardière, Bernard**
**Cabinet Plasseraud 84, rue d'Amsterdam**
**F-75009 Paris (FR)**

Courier Press, Leamington Spa, England.

## Description

L'invention est relative à un dispositif de commande de points chauffants destinés à impressionner une surface thermo-sensible, chaque point chauffant étant déplacé, relativement à la surface thermosensible, suivant un segment et étant propre à marquer des points, notamment noirs u blancs, tout au long de ce segment en des positions successives $x_1$, $x_2$ ... $x_n$ ... selon les informations à reproduire, une alimentation en courant électrique du point chauffant étant effectuée de manière à assurer l'inscription souhaitée, et des moyens de calcul du temps de chauffage du point chauffant pour une position $x_n$, étant prévus pour déterminer un temps de chauffage qui dépend des inscriptions effectuées pour des positions précédentes $x_{n-1}$ ... $x_{n-j}$, ces moyens de calcul étant propres à agir sur des moyens d'interruption pour assurer l'alimentation du point chauffant pendant un temps correspondant à celui déterminé par les moyens de calcul, voir la demande de brevet européen EP—A—0 018 762, publiée le 12 novembre 1980, après la date de priorité de la présente demande.

L'invention concerne plus particulièrement, parce que c'est dans ce cas que son application semble devoir présenter le plus d'intérêt, mais non exclusivement, de tels dispositifs de commande de points chauffants pour appareils de reproduction par fac-similé ou appareils de télécopie, ou imprimantes.

Par l'expression "point chauffant", on désigne un dispositif dont la température augmente lorsqu'il est alimenté en courant électrique, l'application de ce point chauffant (ainsi alimenté) sur la surface thermo-sensible provoquant l'inscription d'un point, généralement un point noir, sur cette surface. Lorsque le point chauffant n'est plus alimenté en courant électrique, il reprend la température ambiante; son application sur la surface sensible ne produit aucun changement de teinte, ce qui correspond, généralement, à un point blanc.

De tels points chauffants ont une constante de temps qui n'est pas symétrique, c'est-à-dire que le temps de chauffe est plus court que le temps de refroidissement entre deux températures déterminées.

Une telle constante de temps entraîne des inconvénients, lors de la reproduction, notamment un manque de netteté dans la séparation des plages de teintes différentes; l'absence de symétrie de la constante de temps peut, en outre, conduire à l'apparition de traînées à la suite d'une longue plage noire qui vient d'être décrite.

Ladite demande de brevet européen EP—A—0 018 762 propose l'utilisation de moyens de calcul du temps de chauffage pour une position $x_n$ propres à déterminer un temps de chauffage qui dépend des inscriptions effectuées précédemment, afin d'éviter, au moins partiellement, les inconvénients évoqués ci-dessus.

L'invention a pour but, surtout, de rendre le dispositif de commande tel qu'il réponde mieux que jusqu'à présent aux diverses exigences de la pratique et notamment tel qu'il permette de mieux tenir compte des inscriptions effectuées précédemment dans la détermination du temps de chauffage, et, en conséquence, d'améliorer la qualité de reproduction, tout en restant relativement simple.

Selon l'invention, un dispositif de commande de points chauffants, du genre défini précédemment, est caractérisé par le fait que les moyens de calcul sont agencés pour diviser le temps maximal $\delta t$ de chauffage d'un point chauffant, pour une position déterminée, en $k$ intervalles, l'ensemble étant tel que le premier intervalle $\delta t_0$ correspond à une période d'alimentation du point chauffant en courant électrique dans tous les cas où l'inscription de l'information correspondant à la position considérée nécessite une alimentation en courant électrique, tandis que les intervalles suivants $\delta t_1$, $\delta t_2$ ... sont affectés respectivement aux points inscrits précédemment, l'alimentation en courant électrique du point chauffant, pendant l'un quelconque de ces intervalles suivants, n'étant effectuée que lorsque le point précédent correspondant à cet intervalle n'a pas nécessité une alimentation en courant électrique et que le point correspondant à la position considérée nécessite une telle alimentation.

Les moyens de calcul peuvent être agencés de manière que l'alimentation en courant électrique du point chauffant soit coupée pendant un intervalle correspondant à un point précédent qui a nécessité une alimentation en courant électrique, cette alimentation pouvant être assurée de nouveau à la fin dudit intervalle.

Selon une autre possibilité, les moyens de calcul sont agencés de manière telle que l'alimentation en courant électrique du point chauffant soit assurée en continu pendant un temps correspondant à la somme des intervalles pour lesquels l'alimentation doit être assurée.

L'invention s'applique plus particulièrement au cas d'un dispositif de commande de points chauffants pour une tête d'écriture comportant plusieurs points chauffants alignés et propre à balayer la surface thermo-sensible suivant une direction transversale, notamment orthogonale, à la direction d'alignement des points chauffants; après chaque balayage, la surface thermo-sensible est déplacée, suivant la direction d'alignement des points chauffants, d'un pas égal à la largeur de la bande qui vient d'être balayée.

L'invention consiste, mises à part les dispositions exposées ci-dessus, en certaines autres dispositions dont il sera plus explicitement question ci-après à propos d'un mode de réalisation particulier décrit avec référence aux dessins ci-annexés, mais qui n'est nullement limitatif.

La figure 1, de ces dessins, représente, sous forme schématique, un dispositif de commande de points chauffants conforme à l'invention.

La figure 2 représente, à grande échelle, une succession de points inscrits sur un segment.

La figure 3 est un diagramme représentant la température portée en ordonnées, en fonction du temps porté en abscisses.

La figure 4 est un diagramme représentant la division du temps de chauffage en plusieurs intervalles.

La figure 5 est un diagramme illustrant la commande.

La figure 6 est un schéma plus complet du dispositif de commande.

La figure 7, enfin, représente une variante du dispositif de commande.

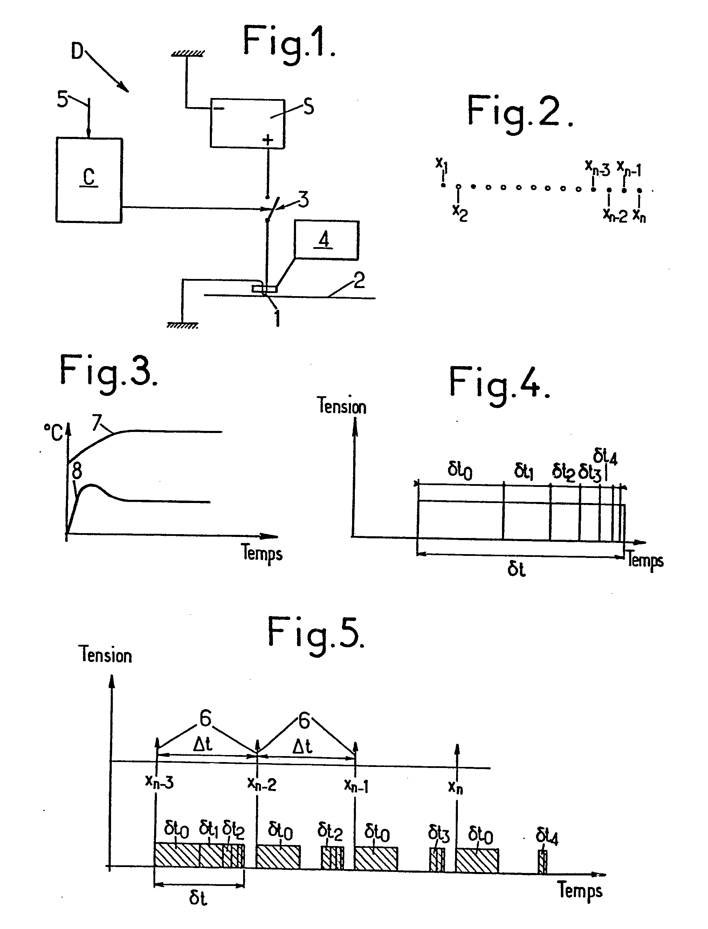

En se reportant à la figure 1, on peut voir un dispositif de commande D de points chauffants tels que 1, destinés à impressionner une surface thermo-sensible 2.

Le point chauffant 1 est très schématiquement représenté; il est de dimensions réduites; à titre d'exemple non limitatif et pour préciser les idées, on peut indiquer qu'un tel point chauffant 1 lorsqu'il est appliqué contre la surface 2 permet d'inscrire un point dont le diamètre est de l'ordre de 1/10 ème de millimètre.

Généralement, pour inscrire un point noir sur la surface 2, le dispositif formant point chauffant 1 doit être alimenté en courant électrique de manière à être échauffé; lorsque le point 1 est appliqué par des moyens mécaniques (non représentés sur la figure 1), contre la surface 2, la diffusion de chaleur dans cette surface 2 agit sur une matière thermo-sensible et provoque un changement de couleur généralement de blanc en noir au niveau du point de contact et dans la zone immédiatement voisine.

De tels points chauffants sont utilisés notamment dans des appareils de reproduction par fac-similé ou dans des appareils de télécopie ou dans des imprimantes.

Chaque point chauffant tel que 1 est déplacé suivant un segment et est propre à marquer des points noirs ou blancs, tout au long de ce segment en des positions x1, x2 ...... xn comme représenté schématiquement sur la figure 2, selon les informations à reproduire.

Le dispositif D comprend des moyens de calcul C du temps de chauffage du point chauffant 1 pour une position $x_n$, ces moyens de calcul C étant propres à déterminer un temps de chauffage $t_n$ qui dépend des inscriptions effectuées pour les positions précédentes $x_{n-1}$ ..... $x_{n-j}$. Ces moyens de calcul C sont propres à agir sur des moyens d'interruption 3 pour assurer l'alimentation du point chauffant 1 pendant un temps correspondant à celui déterminé par les moyens de calcul.

La représentation des moyens d'interruption 3 sur la figure 1 est très schématique; ces moyens d'interruption sont de préférence réalisés de manière classique à l'aide de circuits électroniques notamment à l'aide de transistors qui passent de l'état conducteur à l'état bloqué et inversement selon les signaux issus des moyens de calcul C.

Les moyens d'interruption 3 sont branchés en série sur une ligne reliant le point chauffant 1 par exemple à la borne positive d'une alimentation S sous tension continue. Le dispositif chauffant est, en outre, relié à la masse qui assure le retour à la borne négative de la source S.

Le point chauffant 1 peut être déplacé, suivant un segment, par des moyens mécaniques 4 schématiquement représentés. Les moyens de calcul C reçoivent, sur une entrée branchée sur une ligne 5, les signaux contenant l'information correspondant au point qui doit être écrit.

Sur la figure 5, on a représenté, à la ligne supérieure, les tops d'écriture représentés par des flèches 6. Quatre tops successifs correspondant aux positions $x_{n-3}$, $x_{n-2}$, $x_{n-1}$, $x_n$ ont été représentés. Ces tops sont séparés par des intervalles de temps $\Delta t$ constants. La présence d'un top d'écriture pour une position correspond à un ordre d'écriture d'un point noir pour cette position.

Selon la représentation de la figure 5, quatre points noirs successifs sont donc à inscrire aux positions $x_{n-3}$ ..... $x_n$. Si la position $x_{n-2}$, par exemple, correspondait à un point blanc, aucun top d'écriture n'arriverait par la ligne 5 aux moyens de calcul C lorsque le point chauffant 1 se trouverait au niveau de la position $x_{n-2}$.

Les déplacements mécaniques du point 1 sont synchronisés avec ces tops d'écriture.

Le temps maximal $\delta t$ de chauffage d'un point chauffant 1, pour un top d'écriture 6, est inférieur à l'intervalle minimal $\Delta t$ séparant deux tops d'écriture successifs.

Les moyens de calcul C sont agencés pour diviser le temps maximal de chauffage $\delta t$, pour une position $x_n$ déterminée, en *k* intervalles d'amplitude décroissante comme représenté à plus grande échelle sur la figure 4.

Le premier intervalle $\delta t0$, d'amplitude maximale, correspond, dans tous les cas, à une période d'alimentation en courant électrique du point chauffant 1 lorsqu'un top d'écriture 6 est reçu pour la position correspondante.

Les intervalles de temps suivants $\delta t1$, $\delta t2$, etc. sont affectés, respectivement, aux points inscrits précédemment, c'est-à-dire, lorsque l'on se trouve à la position $x_n$, aux points inscrits aux positions $x_{n-1}$, $x_{n-2}$, etc.

Les amplitudes de ces intervalles $\delta t1$, $\delta t2$ etc. sont décroissantes.

L'alimentation en courant électrique du point chauffant, pour la position $x_n$, n'est assurée, pendant l'un des intervalles de temps $\delta t1$, $\delta t2$ ...... que si les deux conditions suivantes sont remplies: 1°/—le point correspondant à la position précédente $x_{n-1}$, $x_{n-2}$ .... associée à l'intervalle de temps considéré $\delta t1$, $\delta t2$ .... n'a pas nécessité l'alimentation en courant du point chauffant; autrement dit, le point correspondant à la position précédente $x_{n-1}$, $x_{n-2}$ etc. associée à $\delta t1$, $\delta t2$ ..... était un point blanc; 2°/—le point correspondant à la position considérée $x_n$ nécessite une alimentation en courant.

Par contre, si pour une position précédente, par exemple la position $x_{n-2}$, associée à l'intervalle de temps $\delta t2$, l'information inscrite à cette position $x_{n-2}$ a nécessité l'alimentation en courant électrique du point chauffant, il n'y aura aucune alimentation en courant électrique du point chauffant pour la position $x_n$, pendant l'intervalle $\delta t2$, même si l'information à inscrire pour la position $x_n$ correspond à un point noir.

La deuxième ligne de la figure 5 illustre cette commande.

On a supposé dans la représentation de cette deuxième ligne de la figure 5 que les points inscrits pour les positions $x_{n-4}$, $x_{n-5}$ ... précédant la position $x_{n-3}$, étaient tous des points blancs n'ayant pas nécessité l'alimentation en courant électrique du point chauffant.

De ce fait, lorsque le point chauffant occupe la position $x_{n-3}$, pour laquelle un top d'écriture 6 arrive par la ligne 5 aux moyens de calcul C, ces moyens de calcul C vont commander la fermeture des moyens d'interruption 3 de manière à assurer l'alimentation du point chauffant 1 pendant la durée maximale $\delta t$. En effet, le top d'écriture 6 implique, au minimum, une durée de chauffage pendant l'intervalle $\delta t0$ comme expliqué précédemment. En outre, pour tous les intervalles suivants $\delta t1$, $\delta t2$, etc. le chauffage sera maintenu puisque toutes les positions précédentes associées à ces intervalles correspondaient à des points blancs n'ayant entraîné l'alimentation du point chauffant 1.

Lorsque le point chauffant 1 arrive à la position $x_{n-2}$, un nouveau top de chauffage formé par un signal 6 (ligne supérieure de la fig. 5) arrive sur la ligne 5 aux moyens de calcul C. Cela signifie qu'un point noir doit être inscrit à cette position $x_{n-2}$.

Les moyens de calcul C vont commander la fermeture des moyens d'interruption 3 pendant l'intervalle de temps $\delta t0$ à partir de l'instant où le top 6 pour la position $x_{n-2}$ arrive.

Toutefois, l'intervalle de temps $\delta t1$, pour cette position $x_{n-2}$, va correspondre à la position précédente $x_{n-3}$ pour laquelle le point chauffant 1 a été alimenté en courant électrique, pout l'inscription d'un point noir.

Dans ces conditions, les moyens de calcul C commandent l'ouverture des moyens d'interruption 3 pendant cet intervalle de temps $\delta t1$.

Pour les intervalles suivants $\delta t2$, $\delta t3$ ...., les moyens de calcul C commanderont la fermeture des moyens d'interruption 3, pour assurer l'alimentation du point chauffant 1 en courant électrique, car les positions précédentes associées à ces intervalles, à savoir $x_{n-4}$, etc. correspondaient à des points blancs pour lesquels le point chauffant 1 n'était pas alimenté en courant électrique.

Les explications qui précèdent permettent de comprendre immédiatement que pour la position $x_{n-1}$ le point chauffant 1 sera alimenté en courant électrique pendant l'intervalle $\delta t0$, l'alimentation sera coupée pendant les intervalles $\delta t1$, $\delta t2$; l'alimentation sera de nouveau assurée pour les intervalles suivants $\delta t3$ etc. comme représenté schématiquement sur la deuxième ligne de la figure 5.

La même explication s'applique à la position $x_n$ pour laquelle il n'y aura pas alimentation en courant électrique pendant les intervalles $\delta t1$, $\delta t2$ et $\delta t3$.

Le nombre $k$ d'intervalles suivant lequel l'intervalle maximal $\delta t$ est découpé, et la durée $\delta t0$ minimale sont avantageusement ajustés en fonction de la nature de la surface thermosensible, de celle des points chauffants 1 et des conditions générales de fonctionnement, afin de produire les résultats souhaités.

Les moyens de calcul C permettent d'assurer une montée rapide en température du point chauffant en l'alimentant par exemple, en surtension, sans risquer de l'endommager. Les moyens de calcul C permettent de donner, ainsi, à la courbe 7 (fig. 3) de montée en température du point chauffant 1, une pente plus forte correspondant à celle de la courbe 8 de cette même figure 3.

Il est à noter qu'en choisissant $k=3$, on obtient déjà une amélioration sensible.

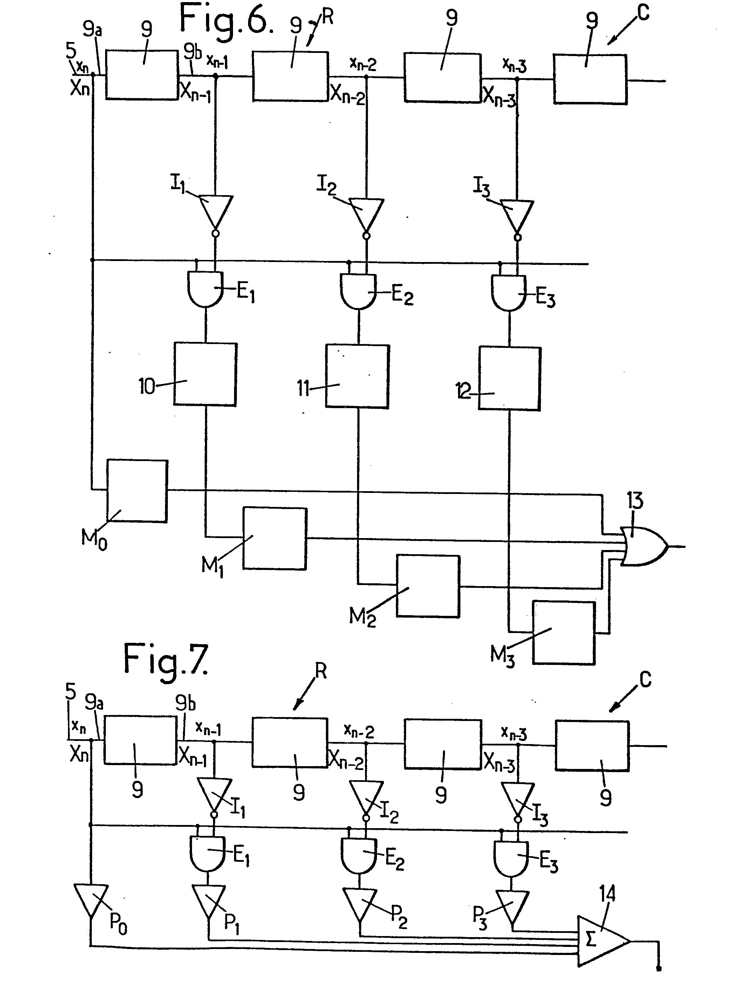

En se reportant à la figure 6, on peut voir un exemple de réalisation des moyens de calcul C.

Les moyens de calcul C comprennent une ligne à retard R à l'entrée de laquelle est branchée la ligne 5 d'arrivée des tops 6 d'écriture. Cette ligne R comprend $k-1$ cellules 9 branchées en série les unes après les autres. Chaque cellule transmet sur sa sortie $9b$, après un retard déterminé, le signal qui était présent sur son entrée $9a$. On choisit les cellules 9 de telle sorte qu'elles introduisent un retard égal à $\Delta t$ c'est-à-dire égal à la période des informations d'écriture.

Ainsi, lorsque l'information relative à la position $x_n$ est présente sur l'entrée $9a$ de la première cellule, l'information relative à la position $x_{n-1}$ est présente sur la sortie de cette première cellule. L'information relative à la position $x_{n-2}$ sera présente sur la sortie de la deuxième cellule à retard etc. comme indiqué sur la figure 6.

Les sorties des circuits inverseurs $I_1$, $I_2$, $I_3$, sont reliées, respectivement, à des circuits inverseurs $I_1$, $I_2$, $I_3$. Pour simplifier les explications, on désignera par $X_n$, $X_{n-1}$ etc. les signaux correspondant aux positions $x_n$, $x_{n-1}$.

Dans ces conditions, on obtient à la sortie des circuits inverseurs $I_1$, $I_2$ .... le signal complémentaire $\overline{X_{n-1}}$, $\overline{X_{n-2}}$ ...... des signaux $X_{n-1}$, $X_{n-2}$.

Les sorties des circuits inverseurs $I_1$, $I_2$, $I_3$, sont reliées, respectivement, à une entrée d'une porte "ET" E1, E2, E3 ...... Une autre entrée de chaque porte ET est reliée à la ligne 5 sur laquelle est présent le signal $X_n$.

Les signaux $X_n$, $X_{n-1}$ sont considérés comme des signaux logiques correspondant à deux états de tension auxquels sont associés les niveaux logiques 1 et 0.

Le signal présent sur la sortie de la porte E1 est égal au produit logique $X_n \cdot \overline{X_{n-1}}$; et ainsi de suite pour les autres portes $E_2$, $E_3$ .....

Les moyens C comprennent en outre plusieurs circuits monostables M0, M1, M2 ..... dont les durées de basculement sont égales respectivement à $\delta t_0$, $\delta t_1$, $\delta t_2$, c'est-à-dire à la durée des intervalles de division du temps de chauffage maximal $\delta t$.

L'entrée de déclenchement du monostable M0 est branchée sur la ligne 5, de telle sorte que la sortie de ce monostable bascule pendant un temps $\delta t_0$ à partir de l'apparition du signal $X_n$.

La sortie de la porte E1 est reliée, par l'intermédiaire d'une cellule à retard 10 à l'entrée de déclenchement du monostable M1. La cellule à retard 10 est agencée pour introduire un retard $\delta t0$ de telle sorte que lorsqu'un signal "1" est présent à la sortie de la porte E1, en même temps qu'un top ou signal "1" arrive par la ligne 5, ce signal n'est transmis à l'entrée de déclenchement du monostable $M_1$ qu'après un temps $\delta t_0$. Dans ces conditions, le monostable $M_1$ ne bascule qu'au moment où le monostable $M_0$ revient à son état initial. Si la sortie de la porte $E_1$ est à l'état "0" au moment où le top d'écriture pour la position $x_n$ arrive sur la ligne 5, le monostable $M_1$ ne sera pas déclenché à la fin du basculement du monostable $M_0$.

La sortie de la porte $E_2$ est reliée par une cellule à retard 11 à l'entrée de déclenchement du monostable $M_2$. Cette cellule à retard 11 est propre à introduire un retard égal à $\delta t_0 + \delta t_1$. On comprend que la présence d'un signal "1" à la sortie de la porte $E_2$ commande le basculement du monostable $M_2$ au bout d'un temps $\delta t_0 + \delta t_1$.

D'une manière semblable, la sortie de la porte $E_3$ est reliée à l'entrée de déclenchement du monostable $M_3$ par une cellule à retard 12 introduisant le retard $\delta t_0 + \delta t_1 + \delta t_2$.

Les sorties des monostables $M_0$, $M_1$, $M_2$, $M_3$ sont reliées en parallèle à une porte "OU" 13.

En reprenant le cas évoqué précédemment avec référence à la dernière ligne de la figure 5 pour la position $x_n$, on voit que les moyens de calcul C de la figure 6 vont donner, à la sortie de la porte 13, un signal correspondant à la représentation de la dernière ligne de la figure 5 pour la position $x_n$.

En effet, les signaux $X_{n-1}$, $X_{n-2}$, $X_{n-3}$, correspondant à des tops d'écriture ou à des signaux "1", les circuits inverseurs $I_1$, $I_2$, $I_3$ donnent un signal "0" à leur sortie. Il en sera de même pour les sorties des portes $E_1$, $E_2$, et $E_3$. Les monostables $M_1$, $M_2$, $M_3$ ne seront pas déclenchés.

Seul le monostable $M_0$ sera déclenché et, éventuellement, les monostables correspondant à des positions $x_{n-4}$ .... non représentés sur la figure 6. Le signal de sortie de la porte 13 comprendra donc un premier créneau correspondant à $\delta t_0$ suivi, au bout du temps $\delta t_1 + \delta t_2 + \delta t_3$, d'un autre créneau $\delta t_4$ ......

Selon une variante, conduisant à des simplifications, les moyens de calcul C fournissent à leur sortie un signal de fermeture des moyens d'interruption 3 tel que les divers créneaux, correspondant à une alimentation en courant électrique, soient juxtaposés.

Par exemple, si l'on se reporte à la dernière ligne de la figure 5, pour la position $x_{n-2}$, l'alimentation en courant électrique du point chauffant sera effectuée pendant un temps $\delta t_0 + \delta t_2 + \delta t_3 +$ ..... mais sans interruption de l'alimentation, (pendant un temps $\delta t_1$), entre l'intervalle $\delta t_0$ et l'intervalle $\delta t_2$.

Autrement dit, la durée globale de l'alimentation en courant électrique du point 1, pour chaque position $x_n$ ... sera la même que celle représentée à la dernière ligne de la figure 5, mais sans interruption.

La figure 7 est un schéma de tels moyens de calcul. C.

On retrouve la ligne à retard R, les circuits inverseurs $I_1$, $I_2$ ..... et les portes $E_1$, $E_2$ ...... représentés sur la figure 6 et dont la description ne sera pas reprise.

La ligne 5 est reliée à l'entrée d'un circuit multiplieur $P_0$, propre à multiplier le signal $X_n$ par un coefficient déterminé $a$. Les sorties des portes $E_1$, $E_2$ ..... sont reliées, respectivement, à l'entrée de circuits multiplieurs $P_1$, $P_2$ ...... propres à multiplier le signal de sortie de la porte par un coefficient $b$, $c$.

Les coefficients $a$, $b$, $c$, ..... sont déterminés en correspondance avec les durées $\delta t_0$, $\delta t_1$, $\delta t_2$ etc. des intervalles évoqués précédemment.

Les sorties des multiplieurs $P_0$, $P_1$, $P_2$ sont reliées en parallèle aux entrées d'un circuit sommateur 14. Ce circuit fournit sur sa sortie 15 un signal dont l'amplitude est en relation directe, et de préférence proportionnelle, au temps de chauffage du point chauffant 1, pour la position $x_n$. Ce signal constitue une image du temps de chauffage.

Ce signal de tension électrique est converti en durée, par exemple par charge d'un condensateur sous une tension correspondant à ce signal, et décharge de condensateur sur une résistance déterminée. La durée de la décharge dépend directement de l'amplitude du signal de tension.

L'alimentation en courant électrique du point chauffant 1 aura une durée égale à ou dépendant de la durée de la décharge.

Il est clair que d'autres moyens de conversion valeur→temps peuvent être utilisés notamment si le sommateur est un additionneur binaire. Dans ce cas, la valeur de sortie de cet additionneur qui constitue une image du temps de chauffage du point chaufant, peut être chargée dans un décompteur de temps décomptant jusqu'à zéro; l'état différent de zéro correspond à la commande du point chauffant.

Il est à noter que les durées $\delta t_0$, $\delta t_1$, $\delta t_2$ ... peuvent être ajustées facilement en fonction des caractéristiques de la tête d'écriture, du type de papier et du contact entre les points chauffants et le papier.

## Revendications

1. Dispositif de commande de points chauffants (1) destinés à impressionner une surface thermo-sensible (2), notamment pour appareil de reproduction par fac-similé ou de télécopie ou imprimante, chaque point chauffant étant déplacé, relativement à la surface thermo-sensible, suivant un segment et étant propre à marquer des points, notamment noirs ou blancs, tout au long de ce segment en des positions successives $x_1$, $x_2$ .... $x_n$ .... selon les informations à reproduire, une alimentation en courant électrique du point chauffant étant effectuée de manière à assurer l'inscription souhaitée, et des moyens de calcul (C) du temps de chauffage du point chauffant pour une position $x_n$, étant prévus pour déterminer un temps de chauffage qui depend des inscriptions effectuées pour des positions précédentes $x_{n-1}$ ...... $x_{n-i}$, ces moyens de calcul (C) étant propres à agir sur des moyens d'interruption (3) pour assurer l'alimentation du point chauffant pendant un temps correspondant à celui déterminé par les moyens de calcul (C), ces moyens de calcul (C) étant agencés pour diviser le temps maximal ($\delta t$) de chauffage d'un point chauffant (1), pour une position déterminée, en $k$ intervalles, ($\delta t_0$, $\delta t_1$, $\delta t_2$ ...), $k$ étant un nombre entier, l'ensemble étant tel que le premier intervalle ($\delta t_0$) correspond à une période d'alimentation du point chauffant (1) en courant électrique dans tous les cas où l'inscription de l'information correspondant à la position considérée nécessite une alimentation en courant électrique, tandis que pour les intervalles suivants ($\delta t_1$, $\delta t_2$ ..) affectés respectivement aux points inscrits précédemment, l'alimentation en courant électrique du point chauffant (1), pendant l'un quelconque de ces intervalles suivants, n'est effectuée que lorsque le point précédent correspondant à cet intervalle n'a pas nécessité une alimentation en courant électrique et que le point correspondant à la position considérée nécessite une telle alimentation.

2. Dispositif selon la revendication 1, caractérisé par le fait que les moyens de calcul (C) sont agencés de manière que l'alimentation en courant électrique du point chauffant (1) est coupée pendant un intervalle correspondant à un point précédent qui a nécessité une alimentation en courant électrique, cette alimentation pouvant être assurée de nouveau à la fin dudit intervalle.

3. Dispositif selon la revendication 1, caractérisé par le fait que les moyens de calcul (C) sont agencés de manière telle que l'alimentation en courant électrique du point chauffant (1) soit assurée en continu pendant un temps correspondant à la somme des intervalles pour lesquels l'alimentation doit être assurée.

4. Dispositif selon l'une quelconque des revendications précédentes, caractérisé par le fait que les moyens de calcul (C) comprennent une ligne à retard (R) comportant plusieurs cellules (9) branchées en série, chaque cellule introduisant un retard ($\Delta t$) égal à la période des informations d'écriture, ces informations étant envoyées à l'entrée de la ligne à retard.

5. Dispositif selon la revendication 4, caractérisé par le fait que les sorties des cellules à retard (9) successives sont reliées, respectivement, à des circuits inverseurs ($I_1$, $I_2$, $I_3$ .....) les sorties de ces circuits inverseurs étant reliées à une entrée d'une porte "ET" ($E_1$, $E_2$ ......) dont une autre entrée est reliée à l'entrée de la ligne à retard.

6. Dispositif selon l'ensemble des revendications 2 et 5, caractérisé par le fait que l'entrée de la ligne à retard est reliée à l'entrée de déclenchement d'un circuit monostable ($M_0$) dont la durée de basculement est égale à la durée du premier intervalle ($\delta t_0$), et que les sorties des portes "ET" ($E_1$, $E_2$, $E_3$ .....) sont reliées, par l'intermédiaire de cellules à retard (10, 11, 12, ...) propres à introduire des retards correspondant à la somme des intervalles successifs ($\delta t_0$; $\delta t_0 + \delta t_1$; $\delta t_0 + \delta t_1 + \delta t_2$ ......) les sorties de ces cellules à retard (10, 11, 12 ...) étant reliées aux entrées de déclenchement de monostables ($M_1$, $M_2$ ......) dont la durée de basculement est égale aux intervalles successifs ($\delta t_1$, $\delta t_2$ ....) les sorties des monostables étant reliées aux entrées d'une porte "OU" (13), la sortie de cette porte "OU" fournissant le signal de commande des moyens d'interruption (3).

7. Dispositif selon l'ensemble des revendications 3 et 5, caractérisé par le fait qu'il comprend des circuits multiplieurs ($P_0$, $P_1$, $P_2$ .....) reliés respectivement à l'entrée de la ligne à retard et aux sorties des portes "ET" ($E_1$, $E_2$ .....), ces circuits étant propres à multiplier les signaux d'entrée par des coefficients appropriés ($a$, $b$, $c$ .....) les sorties des circuits multiplieurs étant reliées en parallèle aux entrées d'un circuit sommateur (14) qui fournit à sa sortie une image du temps de chauffage du point chauffant (1).

## Patentansprüche

1. Steuergerät für Heizelemente (1) zum Bedrucken einer thermoempfindlichen Oberfläche (2), insbesondere für ein Faksimile-Wiedergabegerät, einen Telekopierer oder Drucker, wobei jedes Heizelement in Bezug auf die thermoempfindliche Oberfläche um ein Segment versetzt ist und geeignet ist, Punkte, insbesondere schwarze oder weiße Punkte, entlang diesem Segment in aufeinanderfolgenden

Positionen $x_1$, $x_2$ ... $x_n$ .... entsprechend den wiederzugebenden Informationen zu markieren, wobei die Stromversorgung des Heizelements so erfolgt, daß die gewünschte Beschriftung gewährleistet ist, und wobei eine Einrichtung (C) zur Berechnung der Heizdauer des Heizelements für eine Position $x_n$ vorgesehen ist, um eine Heizdauer zu bestimmen, die von den für die vorangegangenen Positionen $x_{n-1}$ .... $x_{n-j}$ erfolgten Beschriftungen abhängt, wobei diese Recheneinrichtung (C) geeignet ist, um auf eine Unterbrechervorrichtung (3) einzuwirken, um die Stromversorgung des Heizelements während einer Zeit zu gewährleisten, die der Zeit entspricht, die von der Recheneinrichtung (C) ermittelt wurde, wobei diese Recheneinrichtung (C) so ausgelegt ist, daß die maximale Heidauer ($\delta t$) eines Heizelements (1) für eine bestimmte Position in $k$ Intervalle ($\delta t_0$, $\delta t_1$, $\delta t_2$ ...) aufgeteilt wird, wobei k eine ganze Zahl ist, und wobei die Gesamtheit der Intervalle so ist, daß das erste Intervall ($\delta t_0$) einer Stromversorgungsdauer des Heizelements (1) in all den Fällen entspricht, in denen das Niederschreiben der Information entsprechend der genannten Position eine Stromzufuhr erfordert, während für die nachfolgenden Intervalle ($\delta t_1$, $\delta t_2$ ...), die jeweils den zuvor beschrifteten Stellen entsprechen, die Stromversorgung des Heizelements (1) während irgendeinem dieser nachfolgenden Intervalle erst dann erfolgt, wenn der vorhergehende Punkt, der diesem Intervall entspricht, keine Stromversorgung erfordert hat, und wenn der dieser Position entsprechende Punkt eine solche Stromversorgung erfordert.

2. Steuergerät nach Anspruch 1, dadurch gekennzeichnet, daß die Recheneinrichtung (C) so ausgelegt ist, daß die Stromversorgung des Heizelements (1) unterbrochen ist, während eines Intervalls, das einem vorhergehenden Punkt entspricht, der eine Stromversorgung erfordert hat, wobei diese Stromversorgung erneut am Ende des genannten Intervalls erfolgen kann.

3. Steuergerät nach Anspruch 1, dadurch gekennzeichnet, daß die Recheneinrichtung (C) so ausgelegt ist, daß die Stromversorgung des Heizelements (1) fortlaufend gewährleistet ist während einer Zeit, die der Summe der Intervalle entspricht, für die die Stromversorgung gewährleistet sein muß.

4. Steuergerät nach einem der vorhergehenden Ansprüche, dadurch gekennzeichnet, daß die Recheneinrichtung (C) eine Verzögerungsleitung (R) aufweist, die mehrere in Serie geschaltete Zellen (9) umfaßt, wobei jede Zelle eine Verzögerung ($\Delta t$) bewirkt, die gleich ist der Periode der Schreibinformationen, wobei diese Informationen an den Eingang der Verzögerungsleitung geschickt werden.

5. Steuergerät nach Anspruch 4, dadurch gekennzeichnet, daß die Ausgänge der aufeinanderfolgenden Verzögerungszellen (9) jeweils mit Umkehrschaltungen ($I_1$, $I_2$, $I_3$ ...) verbunden

sind, wobei die Ausgänge dieser Umkehrschaltungen mit einem Eingang eines UND-Ports ($E_1$, $E_2$ ...) verbunden sind, von dem ein weiterer Eingang mit dem Eingang der Verzögerungsleitung verbunden ist.

6. Steuergerät nach den Ansprüchen 2 bis 5, dadurch gekennzeichnet, daß der Eingang der Verzögerungsschaltung mit dem Einschalt-Eingang einer monostabilen Schaltung ($M_0$) verbunden ist, deren Umschaltdauer gleich der Dauer des ersten Intervalls ($\delta t_0$) ist, und daß die Ausgänge der UND-Ports ($E_1$, $E_2$, $E_3$ ...) über die Verzögerungszellen (10, 11, 12 ...) so verbunden sind, daß sie Verzögerungssignale liefern, die der Summe der aufeinanderfolgenden Intervalle ($\delta t_0$; $\delta t_0 + \delta t_1$; $\delta t_0 + \delta t_1 + \delta t_2$ ...) entsprechen, wobei die Ausgänge der Verzögerungszellen (10, 11, 12 ...) mit den Einschalt-Eingängen der monostabilen Schaltungen ($M_1$, $M_2$ ...) verbunden sind, deren Umschaltdauer gleich den aufeinanderfolgenden Intervallen ($\delta t_1$, $\delta t_2$ ...) ist, wobei die Ausgänge der monostabilen Schaltungen mit den Eingängen eines "ODER"-Ports (13) verbunden sind, wobei der Ausgang dieses "ODER"-Ports das Steuersignal für die Unterbrechereinrichtung (3) liefert.

7. Steuergerät nach den Ansprüchen 3 und 5, dadurch gekennzeichnet, daß es Multiplikatorschaltungen ($P_0$, $P_1$, $P_2$ ...) aufweist, die jeweils mit dem Eingang der Verzögerungsleitung und mit den Ausgängen der UND-Ports ($E_1$, $E_2$ ...) verbunden sind, wobei diese Schaltungen geeignet sind, die Eingangssignale mit geeigneten Koeffizienten ($a$, $b$, $c$ ...) zu multiplizieren, wobei die Ausgänge der Multiplikatorschaltungen in Parallelschaltung mit den Eingängen einer Additionschaltung (14) verbunden sind, die an ihrem Ausgang ein Bild der Heizdauer das Heizelements liefert.

**Claims**

1. Device for controlling heating elements (1) to print on a thermo-sensitive surface (2), particularly for facsimile reproduction apparatus, telecopier or printer, each heating element being moved with respect to the thermo-sensitive surface along a segment and being adapted to print dots, particularly black or white dots, along that segment at successive locations $x_1$, $x_2$, $x_n$, ... according to the data to be reproduced, an electric current supply of the heating element being carried out for the desired printing and means (C) for computing the heating time of the heating element for a location $x_n$ being provided for determining a heating time duration which is responsive to the printing for preceding locations $x_{n-1}$, ..., $x_{n-j}$, said computing means (C) being arranged to act on cut-off means (3) for supplying the heating element for a time duration corresponding to that determined by the computing means (C), said computing means (C) being arranged for deviding the maximum heating time duration

($\delta_t$) of a heating element (1) for a predetermined location into $k$ intervals ($\delta t_0$, $\delta t_1$, $\delta t_2$, ...), $k$ being an integer, the whole being such that the first interval ($\delta t_0$) corresponds to a duration of electric current supply to the heating element (1) in all occurences when printing of the data corresponding to the considered location requires an electric current supply, while for the next intervals ($\delta_1$, $\delta_2$, ...), respectively dedicated to the earlier printed dots, electric current supply of the heating element during any one of the following intervals is carried out only when the preceding dot corresponding to that interval did not require an electric current supply and when the dot corresponding to the considered location requires such a supply.

2. Device according to claim 1, characterized in that the computing means (C) are arranged for cutting off the electric current supply of the heating element (1) for a time interval corresponding to a preceding dot which require an electric current supply, such supply possibly being again applied at the end of said interval.

3. Device according to claim 1, characterized in that the computing means (C) are arranged for continuously supplying the heating element (1) with electric current for a time corresponding to the sum of the intervals for which the supply should be effected.

4. Device according to any one of the preceding claims, characterized in that the computing means (C) comprise a delay line (R) having a plurality of serially connected cells (9), each cell providing a delay ($\delta t$) equal to the period of the data to be written, such data being sent at the input of the delay line.

5. Device according to claim 4, characterized in that the outputs of the successive delay cells (9) are respectively connected to inverting circuits ($I_1$, $I_2$, $I_3$, ...), the outputs of said inverter circuits being connected to an input of an "AND" gate ($E_1$, $E_2$, ...) having an other input which is connected to the input of the delay line.

6. Device according to claims 2 and 5, characterized in that the input of the delay line is connected to the trigerring input of a monostable circuit ($M_0$) whose set time is equal to the duration of the first interval ($\delta t_0$) and in that the outputs of the AND gates ($E_1$, $E_2$, $E_3$, ...) are connected through delay cells (10, 11, 12, ...) arranged to introduce delays which correspond to the sums of the successive intervals ($\delta t_0$; $\delta t_0 + \delta t_1$; $\delta t_0 + \delta t_1 + \delta t_2$, ...), the outputs of the delay cells (10, 11, 12) being connected to the trigerring inputs of monostable circuits ($M_1$, $M_2$, ...) whose set duration is equal to the successive intervals ($\delta_1$, $\delta_2$, ...), while the outputs of the monostable circuits are connected to the inputs of a OR gate (13), the output of the OR gate providing the control signal for the cut-off means (3).

7. Device according to claims 3 and 5, characterized in that it comprises multiplying circuits ($P_0$, $P_1$, $P_2$, ...) respectively connected to the input of the delay line and to the outputs of the AND gates ($E_1$, $E_2$, ...), said circuits being arranged for multiplying the input signals by appropriate coefficients ($a$, $b$, $c$, ...), the outputs of the multiplying circuits being connected in parallel relation to the inputs of a summing circuit (14) which provides an image of the heating time of the heating element (1) on its output.

Fig.1.

Fig.2.

Fig.3.

Fig.4.

Fig.5.

# Fig.6.

# Fig.7.

2